# EUROPÄISCHE PATENTANMELDUNG

(11) **EP 1 091 050 A1**
(43) Veröffentlichungstag der Anmeldung: **11.04.2001**
(21) Anmeldenummer: 00121674.6
(22) Anmeldetag: 04.10.2000
(51) Int. Cl.: E03C 1/046, C02F 1/68, A23L 2/54, B01F 3/04

(54) **Verfahren und Vorrichtung zur Abgabe von carbonisiertem Trinkwasser über einen Wasserhahn**

(30) Priorität: 05.10.1999 DE 19947822
(71) Anmelder: Linde Gas Aktiengesellschaft, 82049 Höllriegelskreuth (DE)
(72) Erfinder: Stoltze, Björn, Dipl.-Ing., 85764 Oberschleissheim (DE); Lohse, Eberhard, 85748 Garching (DE); Schmidtke, Wolfgang, 33102 Paderborn (DE)

(57) **Zusammenfassung**

Gegenstand der Erfindung sind ein Verfahren und eine Vorrichtung zur Abgabe von carbonisiertem Trinkwasser über einen Wasserhahn (14). Das Trinkwasser wird dabei dem herkömmlichen Leitungswassernetz (1) entnommen und in einer Carbonisierungsstufe (10), insbesondere einem statischen oder dynamischen Mischer, mit Kohlendioxid angereichert. Zur Steuerung der Kohlendioxidzufuhr wird vorgeschlagen, den beim Öffnen des Wasserhahns (14) erfolgenden Druckabfall in der Zufuhrleitung (13) zum Wasserhahn (14) auszunutzen. Hierzu ist insbesondere eine Wirkdruckleitung (16) vorgesehen, die von der Zufuhrleitung (13) abzweigt und zu einem Druckschalter (17) führt, der die Kohlendioxidzufuhr zur Carbonisierungsstufe (10) steuert.

## Beschreibung

Die Erfindung betrifft ein Verfahren zur Abgabe von carbonisiertem Trinkwasser über einen Wasserhahn, wobei der Wasserhahn mit Leitungswasser beaufschlagt wird, welches in einer dem Wasserhahn vorgeschalteten Carbonisierungsstufe bei Bedarf mit Kohlendioxid angereichert wird, sowie eine Vorrichtung zur Durchführung des Verfahrens.

Es sind schon verschiedene Methoden vorgeschlagen worden, um carbonisiertes Trinkwasser direkt einem an das herkömmliche Leitungswassernetz angeschlossenen Wasserhahn entnehmen zu können. Allen Methoden ist gemeinsam, daß das dem Leitungswassernetz entnommene Trinkwasser über eine Carbonisierungsstufe geführt wird, in der das Trinkwasser mit Kohlendioxid angereichert und Kohlendioxid im Trinkwasser gelöst wird. Das so carbonisierte Trinkwasser wird dann an einen Wasserhahn weitergeleitet. Ein Problem dabei ist die bedarfsgerechte Zu- und Abschaltung der Kohlendioxidzufuhr. Eine Zu- und Abschaltung der Kohlendioxidzufuhr direkt an der Kohlendioxidquelle, z.B. einer Kohlendioxiddruckflasche, per Hand ist insbesondere im Haushaltsbereich unpraktisch, da hierzu beispielsweise beim Einbau der Vorrichtung in eine Küchenspüle im Küchenspülenunterbau hantiert werden müßte. Auch eine Betätigung der Zu- und Abschaltung der Kohlendioxidzufuhr z.B. über eine Zugstange von der Küchenspülplatte aus stellt keine technisch elegante Lösung dar. Darüber hinaus wird bei Carbonisierungsstufen, die im Durchlauf carbonisieren, die Kohlendioxidzufuhr nur dann benötigt, wenn Trinkwasser dem Wasserhahn entnommen wird. Die Zu- und Abschaltung der Kohlendioxidzufuhr muß also zusätzlich zur Betätigung des Wasserhahns erfolgen, so daß zwei Handgriffe gleichzeitig notwendig sind, Insgesamt sind also die bisher bekannten Methoden zur Steuerung der Kohlendioxidanreicherung bei der Abgabe von carbonisiertem Trinkwasser über einen Wasserhahn insbesondere für den Haushaltsbereich unbefriedigend.

Der vorliegenden Erfindung liegt daher die Aufgabe zugrunde, ein Verfahren der eingangs genannten Art sowie eine Vorrichtung zur Durchführung des Verfahrens so auszugestalten, daß auf wirtschaftliche Weise eine leichte Handhabung auch im Haushaltsbereich gewährleistet wird.

Diese Aufgabe wird verfahrensseitig erfindungsgemäß dadurch gelöst, daß die Anreicherung des Leitungswassers mit Kohlendioxid durch den beim Öffnen des Wasserhahns erfolgenden Druckabfall und den beim Schließen des Wasserhahns erfolgenden Druckaufbau in dem von der Carbonisierungsstufe zum Wasserhahnauslaß führenden Leitungswasserstrom gesteuert wird.

Mit dieser eleganten Lösung wird erreicht, daß zum Zapfen von carbonisiertem Trinkwasser nur noch ein Handgriff notwendig ist, nämlich die Betätigung des Wasserhahns. Wird der Wasserhahn geöffnet, so schaltet sich automatisch die Kohlendioxidzufuhr ein und das Leitungswasser wird in der Carbonisierungsstufe mit Kohlendioxid angereichert. Dem Wasserhahn kann so carbonisiertes Trinkwasser entnommen werden, ohne daß zusätzliche Handgriffe erforderlich wären. Beim Schließen des Wasserhahns schaltet die Kohlendioxidzufuhr automatisch wieder ab. Beim Einbau der Carbonisierungsstufe in eine Küchenspüle muß also weder im Küchenspülenunterbau hantiert werden, um die Kohlendioxidzufuhr ein- und auszuschalten, noch muß über eine zusätzliche Zugstange oder eine ähnliche Betätigungseinrichtung die Kohlendioxidzufuhr gesteuert werden.

Zweckmäßigerweise wird der Druck in dem von der Carbonisierungsstufe zum Wasserhahn führenden Leitungswasserstrom über eine Wirkdruckleitung an einen Druckschalter und/oder Druckregler weitergeleitet, der die Zufuhr des Kohlendioxids zur Carbonisierungsstufe steuert. Die Wirkdruckleitung kann z.B. aus einem flexiblen Schlauch bestehen, der z.B. auch bei beengten Einbauverhältnissen verlegt werden kann, ohne daß größere Eingriffe in die Küchenspülenarmatur notwendig sind.

Eine praxisgerechte Ausführungsform der Erfindung sieht vor, daß Druckwerte p1 und p2 vorbestimmt werden, bei denen die Kohlendioxidanreicherung ein- und ausgeschaltet wird. Bei Druckabfall auf den vorbestimmten Druckwert p1 wird also die Kohlendioxidanreicherung eingeschaltet und bei Druckanstieg auf den vorbestimmten Druckwert p2 wieder ausgeschaltet. Eine Weiterbildung der Erfindung sieht vor, daß die Kohlendioxidanreicherung nicht nur beim Zapfen von Trinkwasser automatisch ein- und ausgeschaltet wird, sondern auch die Kohlendioxid-Anreicherungsmenge pro Zeiteinheit zwischen den Druckwerten p1 und p2 in Abhängigkeit vom Druck des dem Wasserhahn zuzuführenden Leitungswassers gesteuert wird. Dadurch kann die Kohlendioxid-Anreicherungsmenge in Abhängigkeit von der Stellung des Wasserhahnhebels gesteuert werden.

Die Erfindung betrifft ferner eine Vorrichtung zur zumindest zeitweisen Abgabe von carbonisiertem Trinkwasser über einen Wasserhahn, wobei der Wasserhahn über eine Zufuhrleitung mit einer Carbonisierungseinrichtung verbunden ist, die ihrerseits mit dem Leitungswassernetz in Verbindung steht und an eine Kohlendioxidquelle angeschlossen ist.

Vorrichtungsseitig wird die gestellte Aufgabe dadurch gelöst, daß die Zufuhrleitung über eine Wirkdruckleitung mit einem Druckschalter und/oder Druckregler in Verbindung steht, welcher einerseits mit der Kohlendioxidquelle und andererseits mit der Carbonisierungseinrichtung verbunden ist.

In vielen Fällen ist es wünschenswert, daß nicht nur carbonisiertes Leitungswasser entnommen werden kann, sondern auch herkömmliches Leitungswasser. Zu diesem Zweck kann beispielsweise vor oder hinter der Carbonisierungseinrichtung eine Zweigleitung vorgesehen sein, die zu einer Wasserhahnarmatur führt. Um zu verhindern, daß beim Öffnen dieser Zweigleitung der Leitungswasserdruck zwischen Carbonisierungseinrichtung und Wasserhahnauslaß abfällt, ist gemäß einer bevorzugten Ausgestaltung der Erfindung zwischen der Carbonisierungeinrichtung und der Abzweigung der Wirkdruckleitung von der Zufuhrleitung für das carbonisierte Leitungswasser zum Wasserhahnauslaß ein Rückschlagventil angeordnet.

Eine weitere Ausgestaltung der Erfindung sieht vor, daß in Strömungsrichtung des Leitungswassers vor der Carbonisierungseinrichtung eine Gasdrosseleinrichtung vorgesehen ist, welche den Kohlendioxidvolumenstrom in Abhängigkeit vom Leitungswasserdruck steuert.

Die Carbonisierungseinrichtung kann auf verschiedene Weise ausgestaltet sein. Bevorzugt weist die Carbonisierungseinrichtung einen statischen Mischer auf. Der statische Mischer besteht zweckmäßigerweise aus mindestens einem Rohr, das mit Füllkörpern verschiedenster Geometrie, insbesondere Kugeln, gefüllt ist. Als vorteilhaft hat es sich erwiesen, daß mindestens zwei Rohrabschnitte parallel zueinander vertikal angeordnet sind, wobei deren Innenräume an mindestens einem Ende miteinander verbunden sind. Das Rohr hat zweckmäßigerweise einen Durchmesser von ca. 20 bis ca. 50 mm, besonders bevorzugt ca. 25 bis ca. 35 mm, und eine Gesamtlänge von ca. 0,2 bis ca. 1,5 m, besonders bevorzugt ca. 0,8 bis ca. 1,2 m. Außerdem weisen die Kugeln vorzugsweise einen Durchmesser von ca. 1 bis ca. 10 mm, insbesondere ca. 2 bis ca. 5 mm, auf.

Gemäß einer anderen Variante wird als Carbonisierungseinrichtung ein dynamischer Mischer vorgeschlagen. Der dynamische Mischer weist zweckmäßigerweise einen mit einem Zulauf und einem Ablauf für das Leitungswasser versehenen Behälter auf, in dem eine als Gasstrahlinjektor ausgebildete Gaseintragseinrichtung angeordnet ist, die mit der Kohlendioxidquelle verbunden ist, wobei der Gasstrahlinjektor auf eine Gasstrahlgeschwindigkeit von mindestens 20 m/sek ausgelegt ist. Bevorzugt ist der Gasstrahlinjektor auf eine Gasstrahlgeschwindigkeit von ca. 25 bis ca. 40 m/sek, insbesondere ca. 30 bis ca. 35 m/sek, ausgelegt. Außerdem ist der Gasstrahlinjektor vorteilhafterweise derart ausgerichtet, daß im Leitungswasser eine spiralförmige Strömung induziert wird. Beispielsweise ist der Gasstrahlinjektor tangential zu Behälterwand ausgerichtet Darüber hinaus ist eine Ausrichtung des Gasstrahlinjektors in einem Winkel von ca. 10 bis ca. 30°, insbesondere ca. 15°, gegen die horizontale nach unten geneigt vorteilhaft. Zur Erzeugung eines Gasstrahls mit hoher Geschwindigkeit und hoher kinetischer Energie ist der Gasstrahlinjektor zweckmäßigerweise mit einer Hockdruckgasversorgungseinrichtung verbunden, die für einen Druckbereich von ca. 5 bis ca. 80 bar, insbesondere mindestens 10 bar, ausgelegt ist. Für die überwiegende Zahl der Anwendungsfälle ist eine Auslegung auf einen Druckbereich von ca. 20 bis ca. 60 bar vorgesehen.

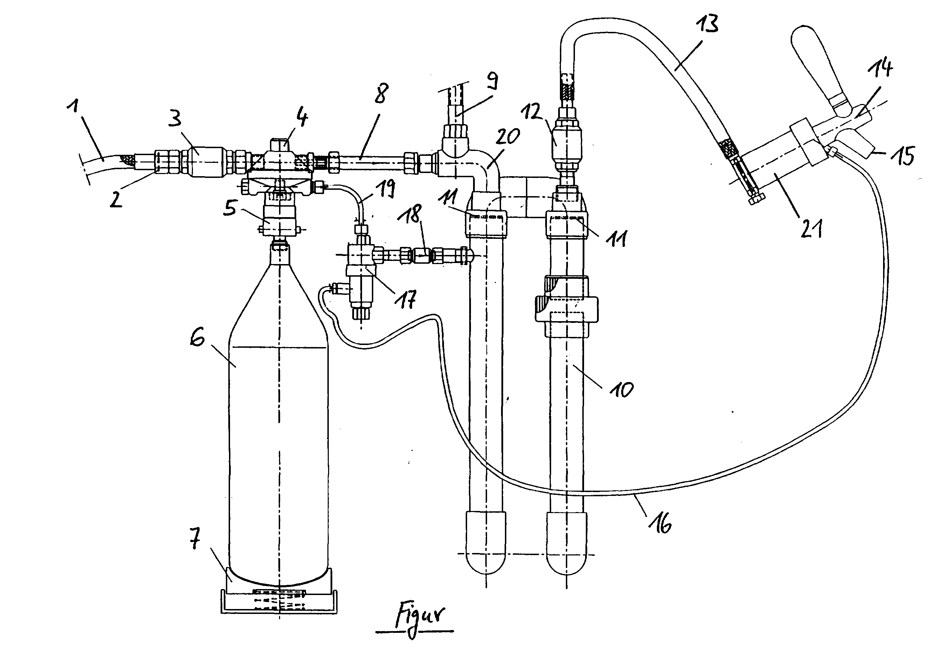

Im folgenden soll die Erfindung anhand eines in der Figur schematisch dargestellten Ausführungsbeispieles näher erläutert werden.

Leitungswasser wird über Leitung 1 dem herkömmlichen Leitungswassernetz entnommen und über einen Sieb 2 und ein Rückschlagventil 3 einer Gasdrosseleinrichtung 4 zugeführt. Die Gasdrosseleinrichtung 4 steht mit einem auf einer Kohlendioxidpatrone 6 sitzenden Patronenventil 5 in Verbindung. Die Kohlendioxidpatrone 6 ist mittels einer Halterung 7 in vertikaler Lage fixiert. Die Gasdrosseleinrichtung 4 wirkt derart auf das Patronenventil 5, daß die aus der Kohlendioxidpatrone 6 ausströmende Kohlendioxidvolumenstrom vom Leitungswasserdruck abhängt. Auf diese Weise wird gewährleistet, daß das Verhältnis der Mengenströme von Wasser und Kohlendioxid konstant gehalten wird. Das Leitungswasser wird über Leitung 8 einem Rohrstutzen 20 zugeführt, der eine Abzweigung 9 für nicht carbonisiertes Leitungswasser aufweist. Die Abzweigung 9 führt zu einer herkömmlichen Wasserhahnarmatur, über die übliches Kaltwasser und gegebenenfalls auch Warmwasser entnommen werden kann. An den Rohrstutzen 20 ist ein statischer Mischer 10 angeschlossen, der aus vier parallel und vertikal angeordneten Rohrabschnitten besteht, die strömungsmäßig miteinander verbunden sind. Das innere dieser Rohrabschnitte ist mit Kunststoffkugeln gefüllt. Die Kunststoffkugeln werden mittels Sieben 11 im Rohr zurückgehalten. Am Auslaß des statischen Mischers 10 ist ein Rückschlagventil 12 angeordnet, an das sich eine Zufuhrleitung 13 anschließt, die zu einem Wasserhahn 14 führt. Zwischen dem Rückschlagventil 12 und dem Wasserhahnauslaß 15 des Wasserhahns 14 ist eine Wasserdrosseleinrichtung, z.B. ein Drosselkegel, zum Druckabbau vorgesehen, Im vorliegenden Ausführugnsbeipiel ist die Wasserdrosseleinrichtung in dne Anschlußstutzen 21 des Wasserhahns 14 integriert. Zwischen der Wasserdrosseleinrichtung und dem Schließmechanismus, insbesondere dem Schließkegel, des Wasserhahns 14 zweigt eine Wirkdruckleitung 16 ab, die mit einem Druckschalter 17 in Verbindung steht. Der Druckschalter 17 ist andererseits über Leitung 19 und die Gasdrosseleinrichtung 4 mit dem Patronenventil 5 der Kohlendioxidpatrone 6 verbunden. Der Druckschalter 17 ist über ein Rückschlagventil 18 an den statischen Mischer 10 angeschlossen.

Die Wirkungsweise dieser Vorrichtung ist folgendermaßen:

An der Gasdrosseleinrichtung 4 liegt der übliche Leitungswasserdruck von ca. 3,5 bis ca. 4 bar an. Entsprechend wird Kohlendioxid aus der Kohlendioxidpatrone 6 über das Patronenventil 5 und die Leitung 19 dem Druckschalter 17 zugeführt. Bei geschlossenem Wasserhahn 14 liegt der genannte Leitungswasserdruck im gesamten System bis zum Wasserhahn 14 an. Falls carbonisiertes Leitungswasser dem Wasserhahnauslaß 15 entnommen werden soll, wird der Wasserhahn 14 geöffnet. Dadurch sinkt der Druck in der Zufuhrleitung 13 beispielsweise auf ca. 1,5 bar, so daß über die Wirkdruckleitung 16 der Druckschalter 17 geöffnet wird. Somit kann Kohlendioxid über das Rückschlagventil 18 in den statischen Mischer 10 strömen. Im statischen Mischer 10 wird das Leitungswasser mit Kohlendioxid angereichert und Kohlendioxid wird im Leitungswasser gelöst. Das carbonisierte Leitungswasser fließt über die Zufuhrleitung 13 zum Wasserhahn 14 und kann über den Wasserhahnauslaß 15 entnommen werden. Wird der Wasserhahn 14 wieder geschlossen, so baut sich in der Zufuhrleitung 13 wieder der übliche Leitungswasserdruck in Höhe von ca. 3,5 bis ca. 4 bar auf, so daß über die Wirkdruckleitung 16 der Druckschalter 17 wieder geschlossen wird. Das Rückschlagventil 12 dient dazu, daß bei Öffnen der Zweigleitung 9 zum Zapfen von herkömmlichem Kaltwasser der Druck in der Zufuhrleitung 13 nicht abfällt und damit der Druck in der Wirkdruckleitung gehalten wird. Die mit der Zweigleitung 9 verbundene Wasserhahnarmatur kann auch mit dem Wasserhahn 14 zur Abgabe von carbonisiertem Leitungswasser kombiniert werden, so daß durch eine einzige Wasserhahnaramtur sowohl herkömmliches Leitungswasser als auch carbonisiertes Leitungswasser abgegeben werden kann. Außerdem kann in der Wirkdruckleitung 16 zusätzlich eine in der Figur nicht dargestellte Verzögerungseinrichtung eingebaut sein, die die Druckänderungen mit Zeitverzögerung an den Druckschalter 17 weitergibt.

## Patentansprüche

1. Verfahren zur Abgabe von carbonisiertem Trinkwasser über einen Wasserhahn (14), wobei der Wasserhahn (14) mit Leitungswasser beaufschlagt wird, welches in einer dem Wasserhahn (14) vorgeschalteten Carbonisierungsstufe (10) bei Bedarf mit Kohlendioxid angereichert wird, **dadurch gekennzeichnet**, daß die Anreicherung des Leitungswassers mit Kohlendioxid durch den beim Öffnen des Wasserhahns (14) erfolgenden Druckabfall und den beim Schließen des Wasserhahns (14) erfolgenden Druckaufbau in dem von der Carbonisierungsstufe (10) zum Wasserhahnauslaß (15) führenden Leitungswasserstrom (13) gesteuert wird.

2. Verfahren nach Anspruch 1, dadurch gekennzeichnet, daß der Druck im von der Carbonisierungsstufe (10) zum Wasserhahnauslaß (15) führenden Leitungswasserstrom (13) über eine Wirkdruckleitung (16) an einen Druckschalter (17) und/oder Druckregler weitergeleitet wird, der die Zufuhr des Kohlendioxids zur Carbonisierungsstufe (10) steuert.

3. Verfahren nach Anspruch 1 oder 2, dadurch gekennzeichnet, daß bei Druckabfall auf einen vorbestimmten Druckwert p1 die Kohlendioxidanreicherung eingeschaltet und bei Druckanstieg auf einen vorbestimmten Druckwert p2 die Kohlendioxidanreicherung ausgeschaltet wird.

4. Verfahren nach einem der Ansprüche 1 bis 3, dadurch gekennzeichnet, daß die Kohlendioxidanreicherungsmenge pro Zeiteinheit zwischen den Druckwerten p1 und p2 in Abhängigkeit vom Druck des dem Wasserhahn zuzuführenden Leitungswassers gesteuert wird.

5. Vorrichtung zur zumindest zeitweisen Abgabe von carbonisiertem Trinkwasser über einen Wasserhahn (14), wobei der Wasserhahn (14) über eine Zufuhrleitung (13) mit einer Carbonisierungseinrichtung (10) verbunden ist, die ihrerseits mit dem Leitungswassernetz (1) in Verbindung steht und an eine Kohlendioxidquelle (6) angeschlossen ist, dadurch gekennzeichnet, daß die Zufuhrleitung (13) über eine Wirkdruckleitung (16) mit einem Druckschalter (17) und/oder Druckregler in Verbindung steht, welcher einerseits mit der Kohlendioxidquelle (6) und andererseits mit der Carbonisierungseinrichtung (10) verbunden ist.

6. Vorrichtung nach Anspruch 5, dadurch gekennzeichnet, daß zwischen der Carbonisierungseinrichtung (10) und der Verbindungsstelle der Wirkdruckleitung (16) mit der Zufuhrleitung (13) ein Rückschlagventil (12) angeordnet ist.

7. Vorrichtung nach Anspruch 5 oder 6, dadurch gekennzeichnet, daß in Strömungsrichtung des Leitungswassers vor der Carbonisierungseinrichtung (10) eine Abzweigung (9) für nicht carbonisiertes Leitungswasser vorgesehen ist.

8. Vorrichtung nach einem der Ansprüche 5 bis 7, dadurch gekennzeichnet, daß in Strömungsrichtung des Leitungswassers vor der Carbonisierungseinrichtung (10) eine Gasdrosseleinrichtung (4) vorgesehen ist, welche die Kohlendioxidanreicherungsmenge pro Zeiteinheit in Abhängigkeit vom Leitungswasserdruck steuert.

9. Vorrichtung nach einem der Ansprüche 5 bis 8, dadurch gekennzeichnet, daß die Carbonisierungseinrichtung (10) einen statischen Mischer aufweist.

10. Vorrichtung nach Anspruch 9, dadurch gekennzeichnet, daß der statische Mischer (10) aus mindestens einem Rohr besteht, das mit Kugeln gefüllt ist.

11. Vorrichtung nach Anspruch 10, dadurch gekennzeichnet, daß mindestens zwei Rohrabschnitte parallel und vertikal angeordnet sind und deren Innenräume an mindestens einem Ende miteinander verbunden sind.

12. Vorrichtung nach Anspruch 10 oder 11, dadurch gekennzeichnet, daß das Rohr einen Durchmesser von ca. 20 bis ca. 50 mm, bevorzugt ca. 25 bis 35 mm, und eine Gesamtwirklänge von ca. 0,2 bis ca. 1,5 m, bevorzugt ca. 0,8 bis ca. 1,2 m, aufweist.

13. Vorrichtung nach einem der Ansprüche 10 bis 12, dadurch gekennzeichnet, daß die Kugeln einen Durchmesser von ca. 1 bis 10 mm, bevorzugt ca. 2 bis ca. 5 mm aufweisen.

14. Vorrichtung nach einem der Ansprüche 5 bis 8, dadurch gekennzeichnet, daß die Carbonisierungseinrichtung (10) einen dynamischen Mischer aufweist

15. Vorrichtung nach Anspruch 14, dadurch gekennzeichnet, daß der dynamische Mischer einen mit einem Zulauf und Ablauf für das Leitungswasser versehenen Behälter aufweist, in dem eine als Gasstrahlinjektor ausgebildete Gaseintragseinrichtung angeordnet ist, die mit der Kohlendioxidquelle verbunden ist, wobei der Gasstrahlinjektor auf eine Gasstrahlgeschwindigkeit von mindestens 20 m/sek ausgelegt ist.

16. Vorrichtung nach Anspruch 15, dadurch gekennzeichnet, daß der Gasstrahlinjektor auf eine Gasstrahlgeschwindigkeit von ca. 25 bis 40 m/sek, insbesondere ca. 30 bis ca. 35 m/sek, ausgelegt ist.

17. Vorrichtung nach Anspruch 15 oder 16, dadurch gekennzeichnet, daß der Gasstrahlinjektor so ausgerichtet ist, daß im Leitungswasser eine spiralförmige Strömung entsteht.

18. Vorrichtung nach einem der Ansprüche 15 bis 17, dadurch gekennzeichnet, daß der Gasstrahlinjektor tangential zur Behälterwand ausgerichtet ist.

19. Vorrichtung nach einem der Ansprüche 15 bis 18, dadurch gekennzeichnet, daß der Gasstrahlinjektor in einem Winkel von 10 bis 30°, insbesondere ca. 15°, gegen die horizontale nach unten geneigt ausgerichtet ist.

20. Vorrichtung nach einem der Ansprüche 15 bis 19, dadurch gekennzeichnet, daß der Gasstrahlinjektor mit einer Hochdruckgasversorgung in Verbindung steht, die auf einen Druckbereich von 5 bis 80 bar, insbesondere mindestens 10 bar, ausgelegt ist.

21. Vorrichtung nach einem der Ansprüche 15 bis 20, dadurch gekennzeichnet, daß die Hochdruckgasversorgung auf einen Druckbereich von 20 bis 60 bar ausgelegt ist.
